# FASCICULE DE BREVET EUROPEEN

(11) **EP 3 838 570 B1**
(45) Date de publication et mention de la délivrance du brevet: **13.09.2023**
(21) Numéro de dépôt: 20213803.8
(22) Date de dépôt: 14.12.2020
(51) Int. Cl.: B29B 13/02, B29B 13/06, B29C 71/00, C08J 7/02, C08K 7/14, C08K 3/36, H01B 3/30

(54) **PROCÉDÉ DE TRAITEMENT D'UN MATÉRIAU CHOISI PARMI UN POLYAMIDE, UN POLYESTER ET UN POLY(MÉTH)ACRYLATE**
VERFAHREN ZUR BEHANDLUNG EINES AUS EINEM POLYAMID, EINEM POLYESTER UND EINEM POLY(METH)ACRYLAT AUSGEWÄHLTEN MATERIALS
METHOD FOR TREATING A MATERIAL CHOSEN FROM A POLYAMIDE, A POLYESTER AND A POLY(METH)ACRYLATE

(30) Priorité: 20.12.2019 FR 1915262
(43) Date de publication de la demande: 23.06.2021
(73) Titulaire: Commissariat à l'énergie atomique et aux énergies alternatives, 75015 Paris (FR); Schneider Electric Industries SAS, 92500 Rueil-Malmaison (FR)
(72) Inventeur: PONCELET, Olivier, 38054 GRENOBLE CEDEX 09 (FR); GETTO, Daniel, 38054 GRENOBLE CEDEX 09 (FR); RENARD, Olivier, 38054 GRENOBLE CEDEX 09 (FR); HASSANZADEH, Mehrdad, 34830 CLAPIERS (FR); MALADEN, Romain, 38650 SINARD (FR); HELAL, Karim, 38000 GRENOBLE (FR)
(74) Mandataire: Brevalex

(56) Documents cités:
- FR-A1- 3 068 700
- US-A- 5 508 060
- US-A1- 2005 240 004
- US-A1- 2018 345 576

## Description

### Domaine technique

La présente invention se rapporte à un nouveau procédé de traitement d'un matériau d'un composant d'un appareil électrique pour conférer des propriétés de résistance à l'humidité améliorées au matériau ainsi traité.

La présente invention se rapporte également à un procédé de fabrication d'une pièce d'un tel composant ainsi qu'aux utilisations, dans l'industrie électrique basse, moyenne ou haute tension, du matériau traité et de la pièce fabriquée.

### État de la technique antérieure

Dans le domaine de l'industrie électrique, le ou les composants électriquement isolants des appareils électriques sont classiquement fabriqués en un matériau polymère. Ce matériau peut en particulier être un matériau composite, c'est-à-dire en un matériau comprenant une matrice polymérique et des charges, ou renforts, qui peuvent se présenter sous la forme de particules ou de fibres.

À titre d'exemples, des composants de ces appareils électriques sont formés par un matériau composite qui est à base de polyamide et qui comprend des charges de silice, en l'espèce des fibres de verre. Ces fibres de verre sont typiquement présentes en une proportion massique comprise entre 30 % m et 50 % m par rapport à la masse totale du matériau composite.

L'utilisation d'un matériau polymérique dans des composants des appareils électriques est de plus en plus courante. Toutefois, il est nécessaire de s'assurer du maintien de propriétés diélectriques et/ou mécaniques particulièrement performantes de ces composants, qui sont fortement sollicités tout au long de leur durée d'utilisation, et dont les propriétés peuvent être dégradées en cas de reprise en eau du matériau.

Pour limiter la reprise en eau d'un matériau composite à base de polyamide et comprenant des charges de silice, le document WO 2018/078114, ci-après référencé [1], propose un procédé de traitement de ce matériau composite par imprégnation de celui-ci par au moins un additif hydrophobe dans le dioxyde de carbone CO₂ supercritique. Un tel additif hydrophobe est plus particulièrement choisi parmi les huiles siliconées diélectriques et les composés fluorés hydrophobes, ces huiles et composés étant solubles dans le CO₂ supercritique.

Le document FR 3 068 700 A1 décrit un procédé d'élaboration d'une pièce en polymère thermodurcissable ou thermoplastique ayant des propriétés anti-feux. Ce procédé comprend, entre autres, une étape de mise en contact de la pièce avec du dioxyde de carbone à l'état supercritique en présence d'un co-solvant notamment choisi parmi l'éther, le xylène et le limonène.

Bien que le procédé décrit par le document [1] soit tout à fait satisfaisant dans le sens où le matériau composite traité se caractérise par une reprise en eau inférieure ou égale à 1 % après une immersion dans l'eau à 90 °C pendant 3 semaines, les Inventeurs se sont fixé comme objectif de rechercher un procédé de traitement alternatif permettant d'obtenir un matériau qui, après exposition dans un environnement humide et chaud pendant une période de près de 6 semaines, se caractérise par de faibles valeurs de reprise en eau, typiquement inférieures ou égales à 3 %, et de très bonnes propriétés diélectriques et/ou mécaniques.

### Exposé de l'invention

Cet objectif ainsi que d'autres encore sont atteints, en premier lieu, par un procédé de traitement d'un matériau d'un composant d'un appareil électrique, le matériau étant choisi parmi un polyamide, un polyester et un poly(méth)acrylate.

Selon l'invention, ce procédé comprend :
- une étape (1) de mise en contact, dans un fluide supercritique, noté SC1, de ce matériau avec un solvant organique polaire, et
- une étape (2) de mise en contact, dans un fluide supercritique SC2, du matériau tel qu'obtenu à l'issue de l'étape (1), avec un ou plusieurs composés solubles dans le fluide supercritique SC2 et répondant chacun à la formule (I) suivante :

   R-(N=C=O)ₙ (I)
dans laquelle
- n est égal à 1 ou 2, et
- R est choisi parmi
   . un groupe hydrocarboné aliphatique, saturé ou insaturé, linéaire ou ramifié comprenant au moins 2 atomes de carbone, et
   . un groupe hydrocarboné aliphatique cyclique, saturé ou insaturé, éventuellement ramifié, comprenant au moins 3 atomes de carbone,
   R pouvant comprendre, en outre, un groupe à insaturation(s) éthylénique(s) polymérisable par voie radicalaire, tel qu'un groupe vinylique, allylique ou (méth)acrylate.

Les Inventeurs ont constaté que, de manière inattendue et surprenante, la mise en contact d'un tel matériau avec un fluide supercritique en présence d'un solvant organique polaire permet d'extraire, de manière particulièrement significative et pratiquement définitive, l'eau résiduelle contenue dans le matériau et, ce faisant, de conférer à ce matériau des propriétés de résistance à l'humidité améliorées.

Il est de surcroît particulièrement intéressant de noter que le procédé de traitement selon l'invention est de mise en oeuvre industrielle aisée, rapide et économique.

Le procédé selon l'invention permet donc non seulement de réduire la teneur en eau mais également de réduire la reprise en eau d'un matériau polymérique particulier, le polymère formant le matériau étant choisi parmi un polyamide, un polyester et un poly(méth)acrylate. Ce matériau est avantageusement un polyamide.

Le ou les polyesters sont des polymères qui contiennent des fonctions ester résultant de la polycondensation de fonctions acide carboxylique et diol d'un ou plusieurs monomères choisis parmi les polyols, les anhydrides et les acides carboxyliques.

Ces polyesters peuvent être des homopolyesters ou copolyesters aliphatiques, des polyesters semi-aromatiques, ou bien encore des polyesters aromatiques.

À titre d'exemples d'homopolyesters aliphatiques, on peut citer le poly(acide glycolique) PGA, le poly(acide lactique) PLA, le polycaprolactone PCL, le polyhydroxyalcanoate PHA et le poly-β-hydroxybutyrate PHB.

À titre d'exemples de copolyesters aliphatiques, on peut citer le polyéthylène adipate PEA et le polybutylène succinate PBS.

À titre d'exemples de polyesters semi-aromatiques ou aromatiques, on peut citer le polytéréphtalate d'éthylène PET, le polytéréphtalate de butylène PBT, le polytéréphtalate de triméthylène PTT, le polyéthylène naphtalate PEN et le polyarylate.

Le ou les poly(méth)acrylates sont des polymères dérivés de l'acide (méth)acrylique, l'expression "acide (méth)acrylique" couvrant aussi bien l'acide acrylique que l'acide méthacrylique.

Ces poly(méth)acrylates peuvent être des sels ou des esters de l'acide poly(méth)acrylique.

À titre d'exemples de sels de poly(méth)acrylate, on peut citer le poly(méth)acrylate de lithium et le poly(méth)acrylate de sodium.

À titre d'exemples d'esters de polyméthacrylate, on peut citer le polyméthacrylate de méthyle PMMA, le polyméthacrylate d'éthyle PEMA, le polyméthacrylate de butyle PBMA et le polyméthacrylate de lauryle.

Le ou les polyamides sont des polymères qui contiennent des fonctions amide résultant de la polycondensation de fonctions acide carboxylique et amine d'un ou plusieurs monomères choisis parmi les lactames, les aminoacides carboxyliques, les acides dicarboxyliques et les diamines.

Ces polyamides peuvent être des homopolymères ou copolymères aliphatiques (notés PA), des polyamides semi-aromatiques ou polyphtalamides (notés PPA), ou bien encore des polyamides aromatiques ou aramides (notés PAA).

À titre d'exemples d'homopolymères aliphatiques, on peut citer le PA 6, le PA 4.6, le PA 6.6, le PA 6.9, le PA 6.10, le PA 6.12, le PA 10.10 et le PA 10.12.

À titre d'exemples de copolymères aliphatiques, on peut citer le PA 6/6, le PA 6.6/6 et le PA 6/6.6/6.10.

À titre d'exemples de polyphtalamides, qui sont des polyamides dits "haute performance" en raison de leurs excellentes propriétés mécaniques et de résistance aux hautes températures, on peut citer le PA 6.T, le PA 9.T, le PA 10.T, le PA 6.I, le PA 6/6.T, le PA 6.6/6.T et le PA MXD.6.

Dans une variante avantageuse, le ou les polyamides du matériau traité par le procédé selon l'invention sont choisis parmi le PA 6, le PA 6.6, le PA 6.10, le PA 6.12 et les polyphtalamides.

Dans une variante préférée, le ou les polyamides du matériau traité par le procédé selon l'invention sont choisis parmi le PA 6.6 et le PA 6.T.

Dans une variante du procédé, le matériau traité par le procédé selon l'invention peut ne comprendre aucune charge.

L'absence d'incorporation de charges présente l'avantage d'obtenir un matériau transparent ou translucide, ce qui peut permettre à un opérateur de visualiser l'état des composants situés à l'intérieur de l'appareil électrique à travers le matériau.

Dans une autre variante du procédé, le matériau traité par le procédé selon l'invention peut être composite et comprendre, en outre, des charges.

Le choix d'incorporer des charges dans le matériau présente deux avantages, d'une part, de limiter davantage la reprise en eau du polymère et, d'autre part, de maintenir des propriétés diélectriques et/ou mécaniques performantes des composants qui sont fortement sollicités tout au long de leur durée d'utilisation.

Les charges peuvent être organiques ou minérales.

Les charges peuvent notamment être choisies parmi des charges de silice, de polyester, d'aramide, de nitrure de bore, de trioxyde d'antimoine et d'alumine et des mélanges de celles-ci.

Ces charges peuvent avantageusement être des charges de silice.

Ces charges peuvent se présenter sous la forme de particules, de fibres ou encore sous la forme de mélanges de ceux-ci.

Lorsque les charges, notamment de silice, sont sous la forme de particules, ces particules peuvent présenter une plus grande dimension comprise entre 0,1 µm et 100 µm et, avantageusement, entre 0,2 µm et 40 µm.

Il est précisé que l'expression "compris entre ... et ..." qui vient d'être citée et qui est utilisée dans la présente demande doit être comprise comme définissant non seulement les valeurs de l'intervalle mais également les valeurs des bornes de cet intervalle.

Lorsque les charges sont sous la forme de fibres, notamment de silice également appelées fibres de verre, elles peuvent présenter un diamètre compris entre 5 µm et 100 µm et, avantageusement, entre 10 µm et 70 µm, leur longueur étant comprise entre 50 µm et 1000 µm et, avantageusement, entre 200 µm et 700 µm.

Dans une variante avantageuse, les fibres, notamment de silice, présentent un rapport longueur/diamètre compris entre 5 et 100 et, de préférence, entre 10 à 50.

Dans une variante du procédé selon l'invention, la proportion massique de charges, notamment de silice, est supérieure ou égale à 20% m, avantageusement comprise entre 25 % m et 60% m et, de préférence, comprise entre 30% m et 50% m, par rapport à la masse totale du matériau composite.

Dans cette étape (1) du procédé selon l'invention, le matériau polymérique est mis en contact avec un solvant organique polaire dans un fluide supercritique SC1.

Il est précisé que par "fluide supercritique", on entend un fluide qui est mis en oeuvre à une température et à une pression qui se situent à des valeurs qui sont supérieures à leurs valeurs de température et de pression critiques respectives.

Le solvant organique polaire qui est mis en oeuvre dans le procédé selon l'invention peut être aussi bien protique qu'aprotique.

Dans le cas où ce solvant est un solvant organique polaire protique, il peut avantageusement être un alcool. De préférence, l'alcool est le méthanol ou l'éthanol.

Dans le cas où ce solvant est un solvant organique polaire aprotique, il peut être choisi parmi une cétone, par exemple l'acétone ou la butanone, un éther et un chloroalcane tel que le dichlorométhane. De préférence, la cétone est l'acétone et l'éther est le tétrahydrofurane (THF).

Dans une variante du procédé selon l'invention, le fluide supercritique SC1 est choisi parmi le dioxyde de carbone, le méthane, le propane, le butane, le diazote et l'éther de diméthyle.

Dans une variante avantageuse, ce fluide supercritique SC1 est le dioxyde de carbone ou le butane.

Dans une variante du procédé selon l'invention, l'étape (1) de mise en contact du matériau avec le solvant organique polaire dans le fluide supercritique SC1 est réalisée à une température comprise entre 80 °C et 200 °C et sous une pression de fluide supercritique SC1 comprise entre 100 bar et 400 bar.

Dans une variante avantageuse, cette température est comprise entre 90° C et 180 °C et, de préférence, entre 100 °C et 170 °C.

Dans une variante avantageuse, la pression de fluide supercritique SC1 est comprise entre 120 bar et 375 bar et, de préférence, entre 150 bar et 350 bar.

Comme indiqué précédemment, l'étape (1) du procédé selon l'invention est de mise en oeuvre aisée et rapide. En particulier, la durée de cette étape (1) peut être comprise entre 30 min et 4 h et, avantageusement, entre 1 h et 3 h.

Le procédé de traitement selon l'invention comprend, après cette étape (1) de mise en contact, dans un fluide supercritique SC1, de ce matériau avec un solvant organique polaire qui vient d'être décrite, une étape (2) complémentaire.

Cette étape (2) complémentaire consiste en une mise en contact, dans un fluide supercritique SC2, du matériau tel qu'obtenu à l'issue de l'étape (1), avec un ou plusieurs composés comprenant au moins un groupe isocyanate, ce ou ces composés étant solubles dans le fluide supercritique SC2 et répondant chacun à la formule (I) suivante :

R-(N=C=O)ₙ (I)

dans laquelle
- n est égal à 1 ou 2, et
- R est choisi parmi
   . un groupe hydrocarboné aliphatique, saturé ou insaturé, linéaire ou ramifié comprenant au moins 2 atomes de carbone, et
   . un groupe hydrocarboné aliphatique cyclique, saturé ou insaturé, éventuellement ramifié, comprenant au moins 3 atomes de carbone,
   R pouvant comprendre, en outre, un groupe à insaturation(s) éthylénique(s) polymérisable par voie radicalaire, tel qu'un groupe vinylique, allylique ou (méth)acrylate.

Lors de cette étape (2), des liaisons covalentes se forment par réaction du ou des groupes isocyanate du composé de formule (I) avec des groupes ester du ou des polyesters, avec des groupes (méth)acrylates du ou des poly(méth)acrylates ou avec des groupes amine et acide carboxylique libres du ou des polyamides ainsi que, lorsque des charges de silice sont présentes, avec des groupes hydroxyle de la silice, conduisant ainsi au greffage covalent du ou des composés de formule (I) au sein du matériau.

La combinaison des étapes (1) et (2) permet ainsi d'obtenir un matériau qui présente un taux de greffage du ou des composés de formule (I) qui est optimisé. En effet, compte tenu de la très faible teneur en eau résiduelle présente dans le matériau tel qu'obtenu à l'issue de l'étape (1), la quantité de sous-produits formés et, en particulier, la quantité d'urée provenant de la réaction du ou des groupes du composé de formule (I) avec l'eau, est réduite.

Le matériau greffé qui est obtenu à l'issue de l'étape (2) se caractérise non seulement par une très faible reprise en eau et par des propriétés diélectriques et/ou mécaniques comparables à celles du matériau tel qu'obtenu à l'issue de la seule étape (1) mais également par des propriétés complémentaires qui lui sont conférées par la nature du groupe R du ou des composés (I) greffés.

Selon une première variante, le groupe R est un groupe hydrocarboné aliphatique, saturé ou insaturé, linéaire ou ramifié comprenant au moins 2 atomes de carbone.

Ainsi, le groupe R selon cette première variante peut être formé par tout groupe alkyle, alcényle ou alcynyle, à chaîne linéaire ou ramifiée, qui comprend au moins 2 atomes de carbone, avantageusement entre 4 et 30 atomes de carbone et, de préférence, entre 6 et 20 atomes de carbone.

À titre d'exemples de composés (I) selon cette première variante, on peut citer l'isocyanate de *n*-octadécyle (de formule *n*-C₁₈H₃₇NCO) et le 1,6-diisocyanate d'hexaméthylène (HMDI, de formule OCN(C₆H₁₂)NCO) qui seront illustrés dans les exemples D, 2.1 et 2.2 ci-après.

Selon une deuxième variante, le groupe R est un groupe hydrocarboné aliphatique cyclique, saturé ou insaturé, éventuellement ramifié, comprenant au moins 3 atomes de carbone.

Ainsi, le groupe R selon cette deuxième variante peut être formé par tout groupe cycloalkyle, cycloalcényle ou cycloalcynyle, éventuellement ramifié, qui comprend au moins 3 atomes de carbone, avantageusement entre 4 et 8 atomes de carbone et, de préférence, 6 atomes de carbone.

À titre d'exemple de composé (I) selon cette deuxième variante, on peut citer l'isocyanate de cyclohexyle (de formule C₇H₁₁NCO) qui sera illustré dans l'exemple 2.2 ci-après.

Qu'il s'agisse de la première variante ou de la deuxième variante, dès lors que le groupe R comprend au moins 6 atomes de carbone, les propriétés hydrophobes et, partant, de faible reprise en eau du matériau greffé par le ou les composés (I) se trouvent renforcées. De telles propriétés se trouvent encore renforcées lorsque le groupe hydrocarboné aliphatique, cyclique ou non, est en tout ou partie fluoré.

Qu'il s'agisse également de la première variante ou de la deuxième variante, le groupe R du ou des composés (I) peut comprendre, en outre, un groupe à insaturation(s) éthylénique(s) polymérisable par voie radicalaire, tel qu'un groupe vinylique, allylique ou (méth)acrylate.

Il est précisé que les expressions "groupe (méth)acrylate" et "monomère (méth)acrylate" que l'on verra plus loin couvrent aussi bien, et respectivement, un groupe acrylate et un monomère acrylate qu'un groupe méthacrylate et un monomère méthacrylate.

À titre d'exemple de composé (I) selon la première variante comprenant en outre un groupe méthacrylate, on peut citer le méthacrylate de 2-isocyanatoéthyle (de formule (C₆H₉O₂)NCO) qui sera illustré dans les exemples E et 3.1 ci-après.

Dans un mode de réalisation avantageux du procédé selon l'invention, lors de l'étape (2), la mise en contact du matériau obtenu à l'issue de l'étape (1) avec le ou les composés de formule (I) dans le fluide supercritique SC2 est réalisée en présence d'un solvant organique polaire aprotique.

Ce solvant organique polaire aprotique peut être choisi parmi les mêmes composés que ceux décrits ci-dessus et, par conséquent, peut avantageusement être choisi parmi une cétone, un éther et un chloroalcane. De préférence, la cétone est l'acétone et l'éther est le tétrahydrofurane.

Dans une variante du procédé selon l'invention, le fluide supercritique SC2 est choisi parmi le dioxyde de carbone, le méthane, le propane, le butane, le diazote et l'éther de diméthyle.

Dans une variante avantageuse, ce fluide supercritique SC2 est le dioxyde de carbone.

Dans une variante du procédé selon l'invention, l'étape (2) de mise en contact du matériau obtenu à l'issue de l'étape (1) avec le solvant organique polaire dans le fluide supercritique SC2 est réalisée à une température comprise entre 60 °C et 200 °C et sous une pression de fluide supercritique SC2 comprise entre 35 bar et 400 bar.

Dans une variante avantageuse, cette température est comprise entre 70° C et 170 °C et, de préférence, entre 60 °C et 160 °C.

Dans une variante avantageuse, la pression de fluide supercritique SC2 est comprise entre 40 bar et 375 bar et, de préférence, entre 50 bar et 350 bar.

La durée de l'étape (2) du procédé selon l'invention peut être comprise entre 30 min et 8 h et, avantageusement, entre 1 h et 4 h.

Dans le cas où le composé de formule (I) ou l'un des composés de formule (I) comprend un groupe à insaturation(s) éthylénique(s) polymérisable par voie radicalaire, le procédé de traitement d'un matériau polymérique peut, en outre, comprendre, après cette étape (2) de mise en contact, dans un fluide supercritique SC2, du matériau obtenu à l'issue de l'étape (1), avec un ou plusieurs composés de formule (I) qui vient d'être décrite, une étape (3) complémentaire.

Cette étape (3) complémentaire consiste en une mise en contact, dans un fluide supercritique SC3, du matériau tel qu'obtenu à l'issue de l'étape (2), avec un mélange comprenant un initiateur de polymérisation radicalaire et un ou plusieurs monomères à insaturation(s) éthylénique(s) polymérisables par voie radicalaire, l'initiateur de polymérisation radicalaire et le ou les monomères étant chacun solubles dans le fluide supercritique SC3.

Lors de cette étape (3), des liaisons covalentes se forment par polymérisation radicalaire des groupes à insaturation(s) éthylénique(s) provenant du ou des composés de formule (I) greffés sur le matériau avec le ou les monomères à insaturation(s) éthylénique(s), conduisant à un matériau greffé et polymérisé se caractérisant toujours par une très faible reprise en eau mais également par des propriétés diélectriques et/ou mécaniques améliorées par rapport à celles du matériau tel qu'obtenu à l'issue de la seule étape (1).

Dans une variante du procédé selon l'invention, le ou les monomères à insaturation(s) éthylénique(s) polymérisables par voie radicalaire qui sont mis en oeuvre dans l'étape (3) sont choisis parmi les monomères (méth)acrylates.

À titre d'exemple de monomères (méth)acrylates, on peut citer le méthacrylate d'éthyle (de formule C₆H₁₀O₂) qui sera illustré dans les exemples E et 3.1 ci-après.

L'initiateur de polymérisation radicalaire peut, quant à lui, être choisi parmi l'azobisisobutyronitrile (AIBN) et les peroxydes, par exemple l'hydroperoxyde de tert-butyle ou le peroxyde de dicumyle.

Dans une variante du procédé selon l'invention, le fluide supercritique SC3 est choisi parmi le dioxyde de carbone, le méthane, le propane, le butane, le diazote et l'éther de diméthyle.

Dans une variante avantageuse, ce fluide supercritique SC3 est le dioxyde de carbone.

Dans une variante plus particulièrement privilégiée, les fluides supercritiques SC2 et SC3 sont identiques et avantageusement constitués par du dioxyde de carbone.

Dans une variante du procédé selon l'invention, l'étape (3) est réalisée à une température comprise entre 50 °C et 100 °C et sous une pression de fluide supercritique SC3 comprise entre 100 bar et 350 bar.

Dans une variante avantageuse, cette température est comprise entre 60° C et 100 °C et, de préférence, entre 85 °C et 90 °C.

Dans une variante avantageuse, la pression de fluide supercritique SC3 est comprise entre 300 bar et 320 bar.

La durée de l'étape (3) du procédé selon l'invention peut être comprise entre 1 h et 5 h et, avantageusement, entre 1 et 4 h.

Dans un mode de réalisation particulièrement privilégié, les fluides supercritiques SC1 et SC2 et, le cas échéant, SC3 sont identiques et avantageusement constitués par du dioxyde de carbone.

Dans un autre mode de réalisation particulièrement privilégié, les étapes (1) et (2) et, le cas échéant, l'étape (3) sont réalisées dans un même réacteur.

Ces deux modes de réalisation qui viennent d'être décrits permettent de réduire le nombre de manipulations ainsi que la durée du traitement et, ce faisant, les coûts industriels directement liés au procédé de traitement.

Comme on va le voir ci-après, le procédé de traitement selon l'invention, qu'il ne comprenne que les étapes (1) et (2) ou bien qu'il comprenne, en outre, l'étape (3), peut être mis en oeuvre sur un matériau polymérique, que ce matériau se présente sous une forme divisée ou bien sous la forme d'une pièce.

Lorsque ce matériau se présente sous la forme d'une pièce, cette pièce peut tout aussi bien être une pièce neuve, c'est-à-dire une pièce qui n'a encore jamais fait l'objet d'une utilisation, qu'une pièce en maintenance, qui correspond à une pièce déjà utilisée et dont on cherche à améliorer les propriétés diélectriques et/ou mécaniques et de résistance à l'humidité.

On observe donc que le procédé selon l'invention n'est pas limité au traitement d'une pièce neuve mais peut tout à fait être transposé au traitement d'une pièce en cours d'utilisation, de manière à améliorer ses propriétés diélectriques et/ou mécaniques et de résistance à l'humidité, ce qui représente un avantage non négligeable pour en augmenter la durée de vie.

Lorsque ce matériau se présente sous une forme divisée, il peut notamment être sous forme de granulés ou encore de plaquettes, cette forme divisée étant destinée à être ultérieurement transformée pour former une pièce finie.

La présente invention se rapporte ainsi, en deuxième lieu, à un procédé de fabrication d'une pièce d'un appareil électrique à partir d'un matériau choisi parmi un polyamide, un polyester et un poly(méth)acrylate, ce matériau se présentant sous une forme divisée.

Selon l'invention, ce procédé comprend les étapes (i₁) et (ii₁) successives suivantes :
(i₁) un traitement du matériau sous forme divisée par la mise en oeuvre du procédé décrit ci-dessus, et
(ii₁) une mise en forme du matériau sous forme divisée traité tel qu'obtenu à l'issue de l'étape (i₁).

Le procédé selon l'invention permet de fabriquer une pièce présentant les excellentes propriétés diélectriques et/ou mécaniques et de résistance à l'humidité présentées par le matériau sous forme divisée à partir duquel cette pièce est obtenue.

Dans ce procédé de fabrication, l'étape (i₁) est réalisée par le procédé de traitement tel que défini ci-dessus, étant précisé que les caractéristiques avantageuses et préférées de ce procédé de traitement, telles que celles relatives aux étapes (1) et (2) et, le cas échéant, (3), aux fluides supercritiques SC1 et SC2 et, le cas échéant, SC3, aux solvants organiques polaires, au(x) composé(s) de formule (I) ainsi qu'au(x) polyamide(s), polyester(s) et poly(méth)acrylate(s), peuvent être prises seules ou en combinaison.

L'étape (i₂) du procédé de fabrication peut notamment être réalisée par toute technique de transformation des matériaux polymériques et, notamment, par extrusion, par injection,...

La présente invention se rapporte, en troisième et quatrième lieux, aux utilisations du matériau traité et de la pièce fabriquée par les procédés de traitement et de fabrication tels que définis ci-dessus, les caractéristiques avantageuses de ces procédés pouvant être prises seules ou en combinaison.

Le matériau traité ainsi que la pièce fabriquée par les procédés selon l'invention peuvent notamment être utilisés dans l'industrie électrique, qu'elle soit de basse tension, de moyenne tension ou de haute tension.

Il est précisé que les expressions "basse tension", "moyenne tension" et "haute tension" sont utilisées dans leurs acceptations habituelles, à savoir:
- l'expression "basse tension" désigne une tension qui est strictement inférieure à 1 kV en courant alternatif et à 1,5 kV en courant continu, et
- l'expression "moyenne tension" désigne une tension qui est supérieure ou égale à 1 kV en courant alternatif et à 1,5 kV en courant continu mais inférieure ou égale à 52 kV en courant alternatif et à 75 kV en courant continu, et
- l'expression "haute tension" désigne une tension qui est strictement supérieure à 52 kV en courant alternatif et à 75 kV en courant continu.

En particulier, la pièce fabriquée peut être constituée par toute pièce d'un mécanisme d'actionnement d'un appareil électrique, notamment de coupure, telle qu'une bielle isolante, un contacteur, une pièce polaire ("embedded pole" ou "assembled pole" en anglais), un isolateur, une traversée, et plus généralement toute pièce isolante électriquement participant à son fonctionnement.

Le matériau traité ainsi que la pièce fabriquée peuvent également être utilisés dans, ou consister en, un ou plusieurs composants d'un appareil électrique tel qu'un transformateur, une ligne ou un jeu de barres pour le transport ou la distribution de l'électricité, ou d'un appareil de coupure tel qu'un interrupteur, un disjoncteur, un combiné interrupteur-fusibles ou un sectionneur, par exemple un sectionneur de mise à la terre. Plus généralement, un appareil électrique peut correspondre à tout matériel permettant la mise sous ou hors tension des portions d'un réseau électrique basse, moyenne ou haute tension.

Par composant de l'appareil électrique, on entend un élément de l'appareil électrique sous tension ou non, situé à l'intérieur ou à l'extérieur de l'appareil électrique.

Dans le cas de leur utilisation à l'intérieur d'un appareil de coupure, ce dernier peut par exemple comprendre une enceinte étanche dans laquelle se trouvent, en outre, un ou des composants électriquement isolants, des composants électriques et un milieu gazeux assurant l'isolation électrique et l'extinction des arcs électriques susceptibles de se former au sein de cette enceinte étanche, le milieu gazeux pouvant comprendre de l'air, un fluoronitrile, une fluorocétone, une hydrofluorooléfine ou bien un mélange de ceux-ci.

D'autres caractéristiques et avantages de l'invention apparaîtront mieux à la lecture du complément de description qui suit, qui se rapporte à des exemples de traitement de matériaux composites à base de polyamide et comprenant des charges de silice ainsi qu'à l'évaluation des propriétés mécaniques et de reprise en eau des matériaux composites ainsi traités, les uns par un procédé conforme à l'invention et les autres par des procédés, dits de "référence".

### Exposé détaillé de modes de réalisation particuliers

### 1. Protocoles opératoires des essais expérimentaux

Les échantillons se présentent sous la forme d'éprouvettes de type A conformes à la norme ISO 3167 formées par un matériau composite constitué par un PA 6.6 comprenant 50 % m de fibres de verre et commercialisé par la Société Solvay sous la dénomination Technyl^{®}A 218 V50 Natural.

Chaque traitement a été réalisé sur un lot de 10 éprouvettes.

### 1.1. Procédé ne comprenant que l'étape (1) (hors invention)

Le lot de 10 éprouvettes de l'exemple A n'a été soumis à aucun traitement et correspond de ce fait à un exemple de référence.

Chaque lot des exemples B et C, qui correspondent également à des exemples de référence, a été placé dans le volume intérieur d'un réacteur porté à une température T1 et au sein duquel chaque lot a été mis en contact, pendant une durée t1, avec un fluide supercritique SC1 introduit et maintenu, pendant la durée t1, à une pression P1.

Chaque lot des exemples 1.1 à 1.3, qui correspondent à trois exemples hors invention, a été placé avec 10 ml d'un solvant organique polaire dans le volume intérieur d'un réacteur porté à une température T1. L'ensemble a été mis en contact, pendant une durée t1, avec un fluide supercritique SC1 introduit et maintenu, pendant la durée t1, à une pression P1.

La nature du fluide supercritique SC1, le solvant organique polaire éventuel, ainsi que les paramètres opératoires T1, P1 et t1 sont précisés dans le Tableau 1 ci-dessous.

**Tableau 1**

| Exemples | SC1 | Solvant | T1(°C) | P1(bar) | t1(h) |
|---|---|---|---|---|---|
| A | - | - | - | - | - |
| B | CO₂ | - | 160 | 300 | 1 |
| C | butane | - | 170 | 110 | 1 |
| 1.1 | CO₂ | éthanol | 160 | 300 | 3 |
| 1.2 | CO₂ | acétone | 160 | 300 | 3 |
| 1.3 | CO₂ | méthanol | 160 | 300 | 3 |

### 1.2. Procédé comprenant les étapes (1) et (2) (selon l'invention)

* Le lot de 10 éprouvettes de l'exemple D, qui correspond à un exemple de référence, a été placé dans le volume intérieur d'un réacteur porté à une température T1 et au sein duquel ce lot a été mis en contact, pendant une durée t1, avec un fluide supercritique SC1 introduit et maintenu, pendant la durée t1, à une pression P1.

Au terme de la durée t1 et après décompression, un pilulier comprenant un mélange formé par :
- 1,06 g d'isocyanate de n-octadécyle (*n*-C₁₈H₃₇NCO),
- 1,01 g de 1,4-diazacyclo[2.2.2]octane (DABCO) comme catalyseur, et
- 2 ml d'acétone,
a été introduit dans le volume intérieur du réacteur qui a ensuite été porté à une température T2 pour une mise en contact de l'ensemble, pendant une durée t2, avec un fluide supercritique SC2 introduit et maintenu, pendant la durée t2, à une pression P2.
* Chaque lot des exemples 2.1 et 2.2, qui correspondent à deux exemples conformes à l'invention, a été placé avec un volume de :
   - 5 ml d'éthanol pour l'exemple 2.1, et
   - 10 ml d'éthanol pour l'exemple 2.2,
dans le volume intérieur d'un réacteur porté à une température T1 pour une mise en contact de l'ensemble, pendant une durée t1, avec un fluide supercritique SC1 introduit et maintenu, pendant la durée t1, à une pression P1.

Au terme de la durée t1 et après décompression, un pilulier comprenant :
- pour l'exemple 2.1, un mélange formé par 1 g d'isocyanate de *n-*octadécyle (*n*-C₁₈H₃₇NCO) et 1 g de DABCO dans 1 ml d'acétone, et
- pour l'exemple 2.2, un mélange formé par 1,6 g d'isocyanate de cyclohexyle (C₇H₁₁NCO) et 0,39 g de 1,6-diisocyanate d'hexaméthylène (OCN(C₆H₁₂)NCO) dans 3 g d'acétone,
a été introduit dans le volume intérieur du réacteur qui a ensuite été porté à une température T2 pour une mise en contact de l'ensemble, pendant une durée t2, avec un fluide supercritique SC2 introduit et maintenu, pendant la durée t2, à une pression P2.

La nature des fluides supercritiques SC1 et SC2, des solvants organiques polaires ainsi que les paramètres opératoires T1, T2, P1, P2, t1 et t2 sont précisés dans le Tableau 2 ci-dessous.

**Tableau 2**

| Exemples | D | 2.1 | 2.2 |
|---|---|---|---|
| Etape (1) SC1/solvant T1(°C)/P1(bar)/t1(h) | CO₂/- 100/300/2 | CO₂/éthanol 160/300/2 | butane/éthanol 170/115/1 |
| Etape (2) Composé (I) SC2/Solvant T2(°C)/P2(bar)/t2(h) | *n*-C₁₈H₃₇NCO CO₂/acétone 100/300/1 | *n*-C₁₈H₃₇NCO CO₂/acétone 100/300/1 | C₇H₁₁NCO + OCN(C₆H₁₂)NCO CO₂/acétone 100/300/1 |

### 1.3. Procédé comprenant les étapes (1) à (3) (selon l'invention)

* Le lot de l'exemple E, qui correspond à un exemple de référence, a été placé dans le volume intérieur d'un réacteur porté à une température T1 et au sein duquel ce lot a été mis en contact, pendant une durée t1, avec un fluide supercritique SC1 introduit et maintenu, pendant la durée t1, à une pression P1.

Au terme de la durée t1 et après décompression, un pilulier comprenant :
- un mélange formé par 1,09 g de méthacrylate de 2-isocyanatoéthyle ((C₆H₉O₂)NCO) et 1 g de DABCO
a été placé dans le volume intérieur du réacteur qui a ensuite été porté à une température T2 pour une mise en contact de l'ensemble, pendant une durée t2, avec un fluide supercritique SC2 introduit et maintenu, pendant la durée t2, à une pression P2.

Au terme de la durée t2 et après décompression, un pilulier comprenant :
- 2 ml de méthacrylate d'éthyle (C₆H₁₀O₂) et 1 g de l'azobisisobutyronitrile (AIBN)
a été placé dans le volume intérieur du réacteur qui a ensuite été porté à une température T3 pour une mise en contact de l'ensemble, pendant une durée t3, avec un fluide supercritique SC3 introduit et maintenu, pendant une durée t3, à une pression P3.
* Le lot de l'exemple 3.1, qui est conforme à l'invention, a été soumis au même protocole opératoire que celui décrit ci-dessus en lien avec le lot de l'exemple E, à l'exception de l'étape (1) qui a été conduite en plaçant le lot de 10 éprouvettes avec 15 ml d'un solvant organique polaire dans le volume intérieur du réacteur porté à une température T1 pour une mise en contact de l'ensemble, pendant une durée t1, avec un fluide supercritique SC1 introduit et maintenu, pendant la durée t1, à une pression P1.

La nature des fluides supercritiques SC1, SC2 et SC3, des solvants organiques polaires ainsi que les paramètres opératoires T1, T2, T3, P1, P2, P3, t1, t2 et t3 sont précisés dans le Tableau 3 ci-dessous.

**Tableau 3**

| Exemples | E | 3.1 |
|---|---|---|
| Etape (1) SC1/solvant T1(°C)/P1(bar)/t1(h) | CO₂/- 160/300/2 | CO₂/éthanol 160/300/2 |
| Etape (2) Composé (I) SC2/Solvant T2(°C)/P2(bar)/t2(h) | (C₆H₉O₂)NCO CO₂/- 100/300/1 | (C₆H₉O₂)NCO CO₂ 100/300/1 |
| Etape (3) SC3/Monomère T3(°C)/P3(bar)/t3(h) | CO₂/C₆H₁₂O₂ 100/300/1 | CO₂/C₆H₁₂O₂ 100/300/1 |

### 2. Évaluation des propriétés des matériaux composites traités

### 2.1. Évaluation de la reprise en eau

La "reprise en eau" traduit la quantité d'eau qui peut être absorbée par un matériau. Elle peut être exprimée par le rapport de l'augmentation de la masse du matériau après immersion dans l'eau par rapport à sa masse initiale.

L'évaluation de la reprise en eau d'un matériau donné consiste à placer un échantillon de matériau dans des conditions d'humidité relatives données pendant une durée prédéfinie. Ce faisant, le matériau s'hydrate, faisant passer la masse de l'échantillon d'une valeur initiale m à une valeur finale (m+δm). La reprise en eau, exprimée en %, est donc définie par le rapport δm/m.

Dans le cas d'espèce, chaque lot d'éprouvettes traitées conformément aux protocoles décrits ci-dessus a été pesé pour en déterminer la masse initiale m.

Chaque lot a ensuite été placé dans une atmosphère à 70 °C et saturée en humidité (humidité relative de 100 %) pendant 1000 h qui correspond à une durée suffisante pour atteindre la saturation des éprouvettes testées. Au terme des 1000 h, chaque lot a été à nouveau pesé pour en déterminer la masse finale m+δm.

Les résultats de reprise en eau sont reportés dans le Tableau 4 ci-dessous.

### 2.2. Évaluation des propriétés mécaniques

Les propriétés mécaniques ont été déterminées par des essais de traction conduits à 23 °C sur chaque lot d'éprouvettes telles qu'obtenues aux paragraphes 1.1. et **1.2.** ci-dessus.

Les valeurs de contrainte à la rupture (en MPa) déterminées conformément à la norme ISO 527-1:2012 sont également reportées dans le Tableau 4 ci-dessous.

**Tableau 4**

| Exemples | Reprise en eau (%) | Contrainte à la rupture (MPa) |
|---|---|---|
| A | 3,9 | 143 |
| B | 3,7 | 141 |
| C | 3,4 | 151 |
| 1.1 | 2,1 | 150 |
| 1.2 | 2,3 | 152 |
| 1.3 | 2,1 | 150 |
| D | 3,3 | 139 |
| 2.1 | 2,2 | 153 |
| 2.2 | 2,7 | 141 |

Les résultats du Tableau 4 mettent clairement en évidence l'effet particulièrement bénéfique du procédé de traitement selon l'invention sur la reprise en eau et les propriétés mécaniques d'un matériau composite à base de polyamide et comprenant des charges en silice.

En particulier, en se référant aux exemples A et B, d'une part, et aux exemples 1.1 à 1.3, d'autre part, on observe que les valeurs de reprise en eau de 3,9 % obtenue en l'absence de tout traitement (exemple A) et de 3,7 % obtenue avec une étape (1) conduite en CO₂ supercritique seul (exemple B) chutent à des valeurs comprises entre 2,1 % et 2,3 %, dès lors que l'étape (1) est conduite en CO₂ supercritique en présence d'un solvant organique polaire tel qu'éthanol, acétone ou méthanol (exemples 1.1 à 1.3). De la même manière, on observe une amélioration des propriétés mécaniques, les valeurs de contrainte à la rupture de 143 MPa et 141 MPa des exemples A et B passant à des valeurs s'établissant entre 150 MPa et 152 MPa pour les exemples 1.1 à 1.3 hors invention.

Cette amélioration est d'autant plus notable si l'on compare les exemples A et B de référence avec l'exemple 2.1, qui met en oeuvre un procédé de traitement comprenant une étape (1) conduite en CO₂ supercritique en présence d'éthanol et une étape (2) conduite en CO₂ supercritique et en présence d'un isocyanate.

La comparaison des valeurs de reprise en eau et de contrainte à la rupture des exemples 1.1 et 2.1 met en évidence un maintien des valeurs de reprise en eau et une augmentation des propriétés mécaniques avec la mise en oeuvre d'une étape (2) complémentaire à l'étape (1).

## Revendications

1. Procédé de traitement d'un matériau d'un composant d'un appareil électrique pour lui conférer des propriétés de résistance à l'humidité améliorées, le matériau étant choisi parmi un polyamide, un polyester et un poly(méth)acrylate, ce procédé comprenant :
- une étape (1) de mise en contact, dans un fluide supercritique SC1, de ce matériau avec un solvant organique polaire, et
- une étape (2) de mise en contact, dans un fluide supercritique SC2, du matériau tel qu'obtenu à l'issue de l'étape (1), avec un ou plusieurs composés solubles dans le fluide supercritique SC2 et répondant chacun à la formule (I) suivante :
R-(N=C=O)ₙ (I)
dans laquelle
- n est égal à 1 ou 2, et
- R est choisi parmi
. un groupe hydrocarboné aliphatique, saturé ou insaturé, linéaire ou ramifié comprenant au moins 2 atomes de carbone, et
. un groupe hydrocarboné aliphatique cyclique, saturé ou insaturé, éventuellement ramifié, comprenant au moins 3 atomes de carbone,
R pouvant comprendre, en outre, un groupe à insaturation(s) éthylénique(s) polymérisable par voie radicalaire, tel qu'un groupe vinylique, allylique ou (méth)acrylate.

2. Procédé selon la revendication 1, dans lequel le matériau est un matériau composite comprenant des charges, telles que des charges de silice, ces charges pouvant se présenter sous la forme de particules, de fibres ou sous la forme de mélanges de ceux-ci et/ou être présentes en une proportion massique supérieure ou égale à 20 % m, avantageusement comprise entre 25 % m et 60 % m et, de préférence, comprise entre 30 % m et 50 % m, par rapport à la masse totale du matériau composite.

3. Procédé selon la revendication 1 ou 2, dans lequel le solvant organique polaire est choisi parmi :
- un solvant organique polaire protique, ce solvant organique polaire protique étant avantageusement un alcool et, de préférence, le méthanol ou l'éthanol, et
- un solvant organique polaire aprotique, ce solvant organique polaire aprotique étant avantageusement choisi parmi une cétone, un éther et un chloroalcane, la cétone et l'éther étant, de préférence et respectivement, l'acétone et le tétrahydrofurane.

4. Procédé selon l'une quelconque des revendications à 3, dans lequel, lors de l'étape (2), la mise en contact du matériau avec le ou les composés de formule (I) dans le fluide supercritique SC2 est réalisée en présence d'un solvant organique polaire aprotique, avantageusement choisi parmi une cétone, un éther et un chloroalcane, la cétone et l'éther étant, de préférence et respectivement, l'acétone et le tétrahydrofurane.

5. Procédé selon l'une quelconque des revendications 1 à 4, qui comprend, en outre, après l'étape (2) et dans le cas où le ou l'un des composés de formule (I) comprend un groupe à insaturation(s) éthylénique(s) polymérisable par voie radicalaire, une étape (3) de mise en contact, dans un fluide supercritique SC3, du matériau tel qu'obtenu à l'issue de l'étape (2), avec un mélange comprenant un initiateur de polymérisation radicalaire et un ou plusieurs monomères à insaturation(s) éthylénique(s) polymérisables par voie radicalaire, l'initiateur de polymérisation radicalaire et le ou les monomères étant chacun solubles dans le fluide supercritique SC3.

6. Procédé selon la revendication 5, dans lequel le ou les monomères à insaturation(s) éthylénique(s) polymérisables par voie radicalaire sont choisis parmi les monomères (méth)acrylates.

7. Procédé selon l'une quelconque des revendications 1 à 6, dans lequel le fluide supercritique SC1 et, le cas échéant, les fluides supercritiques SC2 et SC3 sont choisis parmi le dioxyde de carbone, le méthane, le propane, le butane, le diazote et l'éther de diméthyle et est, avantageusement, le dioxyde de carbone.

8. Procédé selon l'une quelconque des revendications 1 à 7, dans lequel les fluides supercritiques SC1 et SC2 et, le cas échéant, SC3 sont identiques et avantageusement constitués par du dioxyde de carbone.

9. Procédé selon l'une quelconque des revendications 1 à 8, dans lequel les étapes (1) et (2) et, le cas échéant, l'étape (3) sont réalisées dans un même réacteur.

10. Procédé selon l'une quelconque des revendications 1 à 9, dans lequel le ou les polyamides du matériau sont choisis parmi le PA 6, le PA 6.6, le PA 6.10, le PA 6.12 et les polyphtalamides et, de préférence, parmi le PA 6.6 et le PA 6.T.

11. Procédé selon l'une quelconque des revendications 1 à 10, dans lequel le matériau se présente sous une forme divisée ou sous la forme d'une pièce, cette pièce pouvant être une pièce neuve ou une pièce en maintenance.

12. Procédé de fabrication d'une pièce d'un appareil électrique à partir d'un matériau choisi parmi un polyamide, un polyester et un poly(méth)acrylate, ce matériau se présentant sous une forme divisée, ce procédé comprenant les étapes (i₁) et (ii₁) successives suivantes :
(i₁) un traitement du matériau sous forme divisée par la mise en oeuvre du procédé selon l'une quelconque des revendications 1 à 11, et
(ii₁) une mise en forme du matériau sous forme divisée traité tel qu'obtenu à l'issue de l'étape (i₁).

13. Utilisation du matériau traité par le procédé selon l'une quelconque des revendications 1 à 11 ou de la pièce fabriquée par le procédé selon la revendication 12 dans l'industrie électrique basse, moyenne ou haute tension.

14. Utilisation selon la revendication 13 dans un ou plusieurs composants électriquement isolants d'un appareil électrique tel qu'un transformateur, une ligne ou un jeu de barres pour le transport ou la distribution de l'électricité, ou d'un appareil de coupure tel qu'un interrupteur, un disjoncteur, un combiné interrupteur-fusibles ou un sectionneur, par exemple un sectionneur de mise à la terre.

15. Utilisation selon la revendication 14 dans laquelle l'appareil de coupure comprend une enceinte étanche dans laquelle se trouvent, outre le ou les composants électriquement isolants, des composants électriques et un milieu gazeux assurant l'isolation électrique et l'extinction des arcs électriques susceptibles de se former au sein de cette enceinte étanche, le milieu gazeux comprenant de préférence de l'air, un fluoronitrile, une fluorocétone, une hydrofluorooléfine ou bien un mélange de ceux-ci.

## Patentansprüche

1. Verfahren zum Behandeln eines Materials einer Komponente eines elektrischen Geräts, um ihm verbesserte Eigenschaften der Feuchtigkeitsbeständigkeit zu verleihen, wobei das Material aus einem Polyamid, einem Polyester und einem Poly(meth)acrylat ausgewählt wird, wobei das Verfahren Folgendes umfasst:
- einen Schritt (1) des Inkontaktbringens des Material in einem überkritischen Fluid SC1 mit einem polaren organischen Lösungsmittel, und
- einen Schritt (2) des Inkontaktbringen des Materials, wie es am Ende von Schritt (1) erhalten wird, in einem überkritischen Fluid SC2 mit einer oder mehreren Verbindungen, die in dem überkritischen Fluid SC2 löslich sind und jeweils der folgenden Formel (1) entsprechen:
R-(N=C=O)ₙ (I)
wobei
- n gleich 1 oder 2 ist und
- R ausgewählt ist aus
▪ einer aliphatischen Kohlenwasserstoffgruppe, gesättigt oder ungesättigt, linear oder verzweigt, umfassend mindestens 2 Kohlenstoffatome, und
▪ einer zyklischen aliphatischen Kohlenwasserstoffgruppe, gesättigt oder ungesättigt, gegebenenfalls verzweigt, umfassend mindestens 3 Kohlenstoffatome,
wobei R ferner eine oder mehrere radikalisch polymerisierbare, ethylenisch ungesättigte Gruppen, wie etwa eine Vinyl-, Allyl- oder (Meth)acrylatgruppe, umfassen kann.

2. Verfahren nach Anspruch 1, wobei das Material ein Verbundmaterial ist, das Füllstoffe wie Siliziumdioxid-Füllstoffe enthält, wobei diese Füllstoffe in Form von Partikeln, Fasern oder in Form von Mischungen davon vorliegen können und/oder einen Massenanteil größer gleich 20 Masse-%, vorteilhafterweise zwischen 25 Masse-% und 60 Masse-% und vorzugsweise zwischen 30 Masse-% und 50 Masse-%, bezogen auf die Gesamtmasse des Verbundmaterials aufweisen können.

3. Verfahren nach Anspruch 1 oder 2, wobei das polare organische Lösungsmittel ausgewählt wird aus:
- einem protischen polaren organischen Lösungsmittel, wobei das protische polare organische Lösungsmittel vorteilhafterweise ein Alkohol und vorzugsweise Methanol oder Ethanol ist, und
- einem aprotischen polaren organischen Lösungsmittel, wobei das aprotische polare organische Lösungsmittel vorteilhafterweise aus einem Keton, einem Ether und einem Chloralkan ausgewählt wird, wobei das Keton und der Ether vorzugsweise Aceton bzw. Tetrahydrofuran sind.

4. Verfahren nach einem der Ansprüche 1 bis 3, wobei während Schritt (2) das Inkontaktbringen des Materials mit der bzw. den Verbindungen der Formel (1) im überkritischen Fluid SC2 in Gegenwart eines aprotischen polaren organischen Lösungsmittels durchgeführt wird, das vorteilhafterweise aus einem Keton, einem Ether und einem Chloralkan ausgewählt wird, wobei das Keton und der Ether vorzugsweise Aceton bzw. Tetrahydrofuran sind.

5. Verfahren nach einem der Ansprüche 1 bis 4, das nach Schritt (2) und in dem Fall, in dem die oder eine der Verbindungen der Formel (1) eine oder mehrere radikalisch polymerisierbare, ethylenisch ungesättigte Gruppen umfasst, ferner einen Schritt (3) des Inkontaktbringens des am Ende von Schritt (2) erhaltenen Materials in einem überkritischen Fluid SC3 mit einer Mischung, die einen radikalischen Polymerisationsinitiator und ein oder mehrere radikalisch polymerisierbare, ethylenisch ungesättigte Monomere umfasst, wobei der radikalische Polymerisationsinitiator und das bzw. die Monomere jeweils in dem überkritischen Fluid SC3 löslich sind.

6. Verfahren nach Anspruch 5, wobei das bzw. die radikalisch polymerisierbare, ethylenisch ungesättigte Monomere aus (Meth)acrylatmonomeren ausgewählt werden.

7. Verfahren nach einem der Ansprüche 1 bis 6, wobei das überkritische Fluid SC1 und gegebenenfalls die überkritischen Fluide SC2 und SC3 aus Kohlendioxid, Methan, Propan, Butan, Distickstoff und Dimethylether ausgewählt wird und vorteilhafterweise Kohlendioxid ist.

8. Verfahren nach einem der Ansprüche 1 bis 7, wobei die überkritischen Fluide SC1 und SC2 und gegebenenfalls SC3 identisch sind und vorteilhafterweise aus Kohlendioxid bestehen.

9. Verfahren nach einem der Ansprüche 1 bis 8, wobei die Schritte (1) und (2) sowie gegebenenfalls der Schritt (3) im selben Reaktor durchgeführt werden.

10. Verfahren nach einem der Ansprüche 1 bis 9, wobei das bzw. die Polyamide des Materials aus PA 6, PA 6.6, PA 6.10, PA 6.12 und Polyphthalamide und vorzugsweise aus PA 6.6 und PA 6.T ausgewählt werden.

11. Verfahren nach einem der Ansprüche 1 bis 10, wobei das Material in geteilter Form oder in Form eines Teils vorliegt, wobei das Teil ein neues Teil oder ein sich in Wartung befindendes Teil sein kann.

12. Verfahren zum Herstellen eines Teils eines elektrischen Geräts aus einem Material, das aus einem Polyamid, einem Polyester und einem Poly(meth)acrylat ausgewählt wird, wobei das Material in geteilter Form vorliegt, wobei das Verfahren die folgenden aufeinanderfolgenden Schritte (i₁) und (ii₁) umfasst:
(i₁) Behandeln des Materials in geteilter Form durch das Durchführen des Verfahrens nach einem der Ansprüche 1 bis 11, und
(ii₁)Formen des behandelten Materials in geteilter Form, wie es am Ende von Schritt (i₁) erhalten wird.

13. Verwendung des Materials, das nach dem Verfahren nach einem der Ansprüche 1 bis 11 behandelt wird, oder des Teils, das nach dem Verfahren nach Anspruch 12 in der Nieder-, Mittel- oder Hochspannungs-Elektroindustrie hergestellt wird.

14. Verwendung nach Anspruch 13 in einer oder mehreren elektrisch isolierenden Komponenten eines elektrischen Geräts wie eines Transformators, einer Leitung oder einer Stromschiene für die Übertragung oder die Verteilung von Elektrizität, oder einer Unterbrechungsvorrichtung wie eines Schalters, eines Leistungsschalters, eines kombinierten Sicherungsschalters oder eines Trennschalters, zum Beispiel eines Erdungstrennschalters.

15. Verwendung nach Anspruch 14, wobei die Unterbrechungsvorrichtung eine abgedichtete Kammer umfasst, in der sich neben dem oder den elektrisch isolierenden Komponenten auch elektrische Komponenten und ein gasförmiges Medium befinden, das elektrische Lichtbögen, die sich im Inneren dieser abgedichteten Kammer bilden könnten, elektrisch isoliert und löscht, wobei das gasförmige Medium vorzugsweise Luft, ein Fluornitril, ein Fluorketon, ein Hydrofluorolefin oder ein Gemisch davon umfasst.

## Claims

1. Process for the treatment of a material of a component of an electrical appliance to impart improved moisture resistance properties to this material, the material being chosen from among a polyamide, a polyester and a poly(meth)acrylate, this process comprising:
- a step (1) of bringing this material into contact, in a supercritical fluid SC1, with a polar organic solvent, and
- a step (2) of bringing the material as obtained at the end of step (1) into contact, in a supercritical fluid SC2, with one or several compounds soluble in the supercritical fluid SC2 and each satisfying the following formula (I):
R-(N=C=O)ₙ (I)
wherein
- n is equal to 1 or 2, and
- R is chosen from among
. a saturated or unsaturated, linear or branched, aliphatic hydrocarbon group comprising at least 2 carbon atoms, and
. a saturated or unsaturated, possibly branched, cyclic aliphatic hydrocarbon group comprising at least 3 carbon atoms,
R possibly also comprising a free-radically polymerizable ethylenically unsaturated group such as a vinyl, allyl or (meth)acrylate group.

2. Process according to claim 1, wherein the material is a composite material containing fillers, such as silica fillers, these fillers possibly being in the form of particles, fibers or in the form of mixtures thereof and/or being present in a proportion by mass greater than or equal to 20% m, advantageously between 25% m and 60% m and, preferably, between 30% m and 50% m, relative to the total mass of the composite material.

3. Process according to claim 1 or 2, wherein the polar organic solvent is chosen from among:
- a protic polar organic solvent, this protic polar organic solvent being advantageously an alcohol and, preferably, methanol or ethanol, and
- an aprotic polar organic solvent, this aprotic polar organic solvent being advantageously chosen from among a ketone, an ether and a chloroalkane, the ketone and the ether being, preferably and respectively, acetone and tetrahydrofuran.

4. Process according to any one of claims 1 to 3, wherein, during step (2), the material is brought into contact with the compound(s) of formula (I) in the supercritical fluid SC2 in the presence of an aprotic polar organic solvent, advantageously chosen from among a ketone, an ether and a chloroalkane, the ketone and the ether being, preferably and respectively, acetone and tetrahydrofuran.

5. Process according to any one of claims 1 to 4, further comprising, after step (2) and in the case in which one of the compounds of formula (I) comprises a free-radically polymerizable ethylenically unsaturated group, a step (3) consisting of bringing the material as obtained at the end of step (2) into contact, in a supercritical fluid SC3, with a mixture comprising a radical polymerization initiator and one or several free-radically polymerizable ethylenically unsaturated monomers, the radical polymerization initiator and the monomer(s) each being soluble in the supercritical fluid SC3.

6. Process according to claim 5, wherein the free-radically polymerizable ethylenically unsaturated monomer(s) are chosen from among (meth)acrylate monomers.

7. Process according to any one of claims 1 to 6, wherein the supercritical fluid SC1 and, possibly, the supercritical fluids SC2 and SC3 are chosen from among carbon dioxide, methane, propane, butane, dinitrogen and dimethyl ether and are, advantageously, carbon dioxide.

8. Process according to any one of claims 1 to 7, wherein the supercritical fluids SC1 and SC2 and, possibly, SC3 are identical and are advantageously composed of carbon dioxide.

9. Process according to any one of claims 1 to 8, wherein steps (1) and (2) and, possibly, step (3) are carried out in the same reactor.

10. Process according to any one of claims 1 to 9, wherein the polyamide(s) of the material are chosen from among PA 6, PA 6.6, PA 6.10, PA 6.12 and polyphthalamides and, preferably, among PA 6.6 and PA 6.T.

11. Process according to any one of claims 1 to 10, wherein the material is in a divided form or in the form of a part, this part possibly being a new part or a part in maintenance.

12. Process for manufacturing a part of an electrical appliance from a material chosen from among a polyamide, a polyester and a poly(meth)acrylate, this material being in a divided form, this process comprising the following successive steps (i₁) and (iiᵢ):
(i₁) treatment of the material in divided form by application of the process according to any one of claims 1 to 11, and
(ii₁) forming of the treated material in divided form as obtained at the end of step (i₁).

13. Use of the material treated by the process according to any one of claims 1 to 11 or of the part manufactured by the process according to claim 12 in the low, medium or high voltage electrical industry.

14. Use according to claim 13 in one or several electrically insulating components of an electrical appliance such as a transformer, a line or a busbar for the transmission or distribution of electricity, or a breaking device such as a switch, a circuit breaker or a combined fuse-switch or an isolating switch, for example an earthing isolator.

15. Use according to claim 14, wherein the breaking appliance comprises a sealed chamber in which there are, in addition to the one or more electrical insulating components, electrical components and a gaseous medium electrically insulating and extinguishing electric arcs that could form inside this sealed chamber, the gaseous medium preferably including air, a fluoronitrile, a fluoroketone, a hydrofluoroolefine or a mixture thereof.
